Europäisches Patentamt

European Patent Office

Office européen des brevets

(11) Publication number : **0 526 210 A1**

## (12) EUROPEAN PATENT APPLICATION

(21) Application number : 92306964.5

(22) Date of filing : 30.07.92

(51) Int. Cl.⁵ : **G01N 35/06,** G01F 23/26, B01L 3/02

(30) Priority : **01.08.91 JP 68304/91 U**

(43) Date of publication of application :
**03.02.93 Bulletin 93/05**

(84) Designated Contracting States :
**DE FR GB IT**

(71) Applicant : **TOA MEDICAL ELECTRONICS CO., LTD.**
**2-1, Minatojima, Nakamachi 7-chome**
**Chuoku, Kobe (JP)**

(72) Inventor : **Koeda, Noriaki**
**20-18, Nakano 2-chome**
**Nishiku, Kobe (JP)**
Inventor : **Tanaka, Kunio**
**229-1, Hiraokacho Shinzaike**
**Kakogawashi, Hyogoken (JP)**
Inventor : **Izumi, Takayoshi**
**2-702, 26 Koujidai 2-chome**
**Nishiku, Kobe (JP)**

(74) Representative : **Price, Paul Anthony King**
**D. Young & Co. 10 Staple Inn**
**London WC1V 7RD (GB)**

(54) **Apparatus for detecting bubbles in reagent pipetting apparatus.**

(57) In an automatic sample analyzer, a liquid specimen and a reagent are mixed in a reaction container. If, however, there is a bubble in the reagent container (16), the correct amount of reagent is not dispensed. Accordingly, a liquid surface detecting circuit (19) detects the liquid surface of the reagent on the basis of an impedance change between a pipet (10) and the ground (14). The height of the liquid surface before and after suction of the reagent is compared on the basis of the output of the liquid surface detecting circuit (19). A control circuit (30) determines that a bubble has been detected if the height difference is more than a specified value, or outside a range of values, and a driving circuit (32) of the driving means (34) for the pipet (10) is controlled accordingly. Thus, when sucking the reagent from the reagent container (16) with the pipet (10), any bubble can be detected with certainty. Also, because no separate bubble detection probe is required, a thin reagent container (16) may be used.

FIG. 2

EP 0 526 210 A1

The invention relates to apparatus for detecting bubbles in reagent pipetting apparatus, such as air bubbles formed at the time of pipetting reagents in apparatus for automatically analyzing liquid specimens.

In an automatic analyzer, various reagents are used. A specific amount of the reagent in the reagent container is dispensed from a pipet connected to a measuring device such as syringe, and is discharged into the reaction container. In the reaction container, the specimen and reagent are mixed and react with each other.

If there are bubbles in the reagent container, the correct amount of reagent will not be dispensed. Bubbles may be formed in the reagent, for example, when turning upside down and agitating the frozen reagent in order to thaw it, or when conveying or transporting the reagent. In the case of a reagent containing a component that easily forms bubbles, the bubbles do not disappear and remain floating on the liquid surface.

On the other hand, in order to avoid the deposit of reagent on the outer wall of the pipet, a pipet having a liquid level detecting function in known. When detecting the liquid level, if bubbles are present, the bubble surface may be mistaken for the liquid surface, and correct dispensing is not possible.

Japanese examined Patent Hei. 1-45870 discloses a liquid weighing amount confirmation control device for confirming the amount of liquid sampled by the pipet by comparing the liquid level height in the container and the extent to which the pipe is lowered. In this device, when the difference between the two is more than ±10 to 20%, the pipet is regarded as being clogged.

Japanese Laid-open Patent Hei. 2-40562 discloses a liquid dispensing device for detecting the liquid surface before and after dispensing and for monitoring for improper dispensing. It also proposes regarding the liquid surface position detected after dispensing in the current step as being the liquid surface position before dispensing in the next step.

In both the device of JP-1-45870 and the device of JP-2-40562, the liquid surface detecting means (or level sensor) is installed near the pipet, separately from the pipet, and is inserted into the container together with the pipet so as to detect the liquid surface.

Accordingly, such an arrangement cannot be applied to a thin (slender) reagent container. This is a serious problem because of the downsizing trend that has recently become particularly important. If the reagent container is not thin, but if the reaction container is thin, the result is the same, that is, a thin suction part is needed.

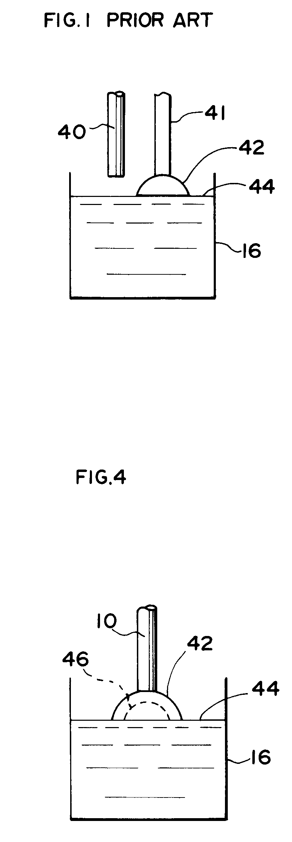

Besides, since the liquid surface detecting position and liquid sucking (aspirating) position are different, it causes problems in detecting bubbles. Fig. 1 explains this point. When the pipet 40 and liquid surface detecting means 41 descend and there is a bubble 42 just beneath the liquid surface detecting means 41, the liquid surface detecting means 41 detects the bubble 42 as the liquid surface 44, thereby stopping the descending motion of the pipet 40 and liquid surface detecting means 41. Since the pipet 40 does not reach the liquid surface, the reagent cannot be sucked correctly. If, for example, the reagent container diameter is 12 mm and the amount of reagent to be dispensed is 10 μl, the liquid surface moves by not more than 0.1 mm, and such a small movement cannot be detected easily.

According to the present invention, there is provided apparatus for detecting bubbles in reagent pipetting apparatus, comprising: a pipet for sucking and dispensing a reagent, the pipet being movable up and down by driving means; a driving circuit for driving and controlling the driving means; a liquid surface detecting circuit for detecting the liquid surface of the reagent on the basis of an impedance change between the pipet and the ground; and a control circuit for comparing the height of the liquid surface before and after suction of reagent on the basis of liquid surface detection information output by the liquid surface detecting circuit, determining that a bubble has been detected if the height difference is more than a specific value, and thereby controlling the driving circuit.

Because the pipet itself is used to detect bubbles in a reliable manner, the present invention means that a narrow or thin reagent container may be used.

Bubbles are reliably detected by using the liquid surface detecting circuit to detect the liquid surface on the basis of the impedance change between the lower end of the pipet and the ground. If the change in height of the liquid surface is abnormal, it indicates that a bubble has been detected.

The invention will now be described by way of a non-limiting embodiment with reference to the accompanying drawings, in which:-

Fig. 1 is an explanatory diagram showing the detection of a bubble by conventional apparatus;

Fig. 2 is a diagrammatic view of an embodiment of apparatus for detecting bubbles in reagent pipetting apparatus in accordance with the invention;

Fig. 3 is a flow chart of the operation of a control circuit shown in Fig. 2; and

Fig. 4 is an explanatory diagram showing the detection of a bubble by the apparatus of Fig. 2.

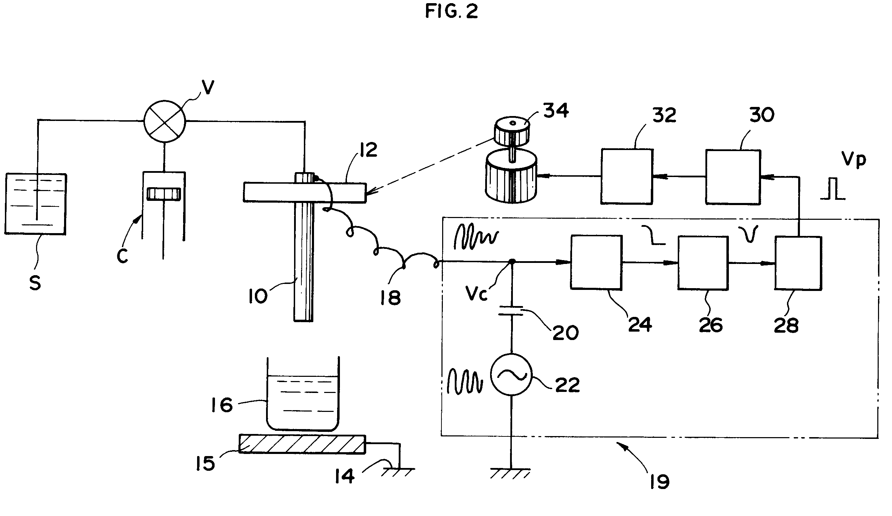

Fig. 2 shows an embodiment of the invention. In Fig. 2, numeral 10 is a pipet for sucking and dispensing a reagent, and it is made of conductive material, such as stainless steel. Numeral 12 is an arm which holds the pipet 10, and the arm 12 and pipet 10 are designed to be moved up and down together by a driving source 34. Numeral 32 denotes a driving circuit for driving and controlling the driving source 34. Numeral 16 is a reagent container filled with a reagent, and it is put on a stand 15 made of a conductive material grounded to the ground 14.

The pipet 10 is connected to a liquid surface detecting circuit 19 through a cable 18. The liquid surface detecting device 19 comprises a circuit matching capacitor 20, a high frequency oscillator 22 (with an oscillation frequency of, for example, several MHz), a detecting circuit 24, a differential circuit 26, and a comparator circuit 28. Between the liquid surface detecting device 19 and driving circuit 32, a control circuit 30 is disposed. Besides, V is a changeover valve, C is a weighing device, and S is a cleaning liquid tank filled with cleaning liquid.

The technology for detecting the liquid surface on the basis of capacitance change is known hitherto and is explained only briefly below.

Basically, the capacitance between the pipet 10 and the ground 14 consists of the composite capacitance of three capacitances, that is, the capacitance $C_1$ between the specimen and the ground, the capacitance $C_2$ between the specimen and the pipet, and the capacitance $C_3$ between the pipet and the ground, and the total capacitance $C_{t1}$ is expressed as

$$C_{t1} = C_3 + C_1 C_2 / (C_1 + C_2).$$

When the pipet 10 contacts the liquid surface, $C_2$ becomes $\infty$, and hence the total changes to

$$C_{t2} = C_3 + C_1$$

At this time, the amount of change is

$$C_{t2} - C_{t1} = C_1^2 / (C_1 + C_2).$$

Hence the capacitance increases.

The value of $C_1$ varies with the container material, distance from the ground, electric conductivity of the specimen, and other conditions. In actual measurements, the amount of change in a plastic container was about 1 to 2 pF.

When a conductive container is used, the resistance change is greater than the capacitance change. In view of this point, in this Specification, "capacitance change" is mentioned as "impedance change".

As the pipet 10 descends to contact the liquid surface, the capacitance between the pipet 10 and the ground 14 increases, and the wave crest value of the detected high frequency signal Vc becomes smaller. This high frequency signal Vc is detected in the detecting circuit 24 and is converted into a DC signal, and furthe! the level change of the DC signal is detected by the differential circuit 26, and it is compared with a specific level in the comparator circuit 28, thereby obtaining a liquid surface detection signal Vp.

In response to the liquid surface detection signal Vp, the control circuit 30 stops the descending motion of the pipet 10 through the driving circuit 32 and driving source 34, thereby detecting the bubble.

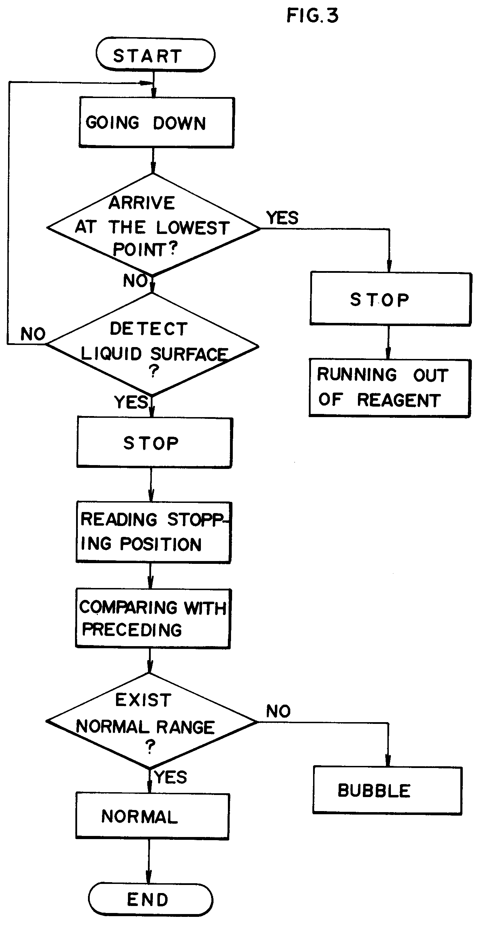

Fig. 3 is the flow chart for the control circuit 30. The pipet 10 is initially located at the initial position shown in Fig. 2. By a descending command, it begins to descend. Whether the pipet 10 reached the lowest point or not is detected by a limit switch (not shown). If it reaches the lowest point before arriving at the liquid surface, the descending motion is stopped, and a reagent shortage alarm is issued. If the liquid surface is detected before reaching the lowest point, the descending motion is stopped, and the stopping position is read. The driving source 34 is a stepping motor which rotates by an angle proportional to, for example, a given number of pulses. By counting the number of pulses from the start of driving, the distance from the initial position to the liquid surface is known.

In the memory (not shown) of the control circuit 32, the position of the liquid surface obtained by previous measurement is stored, and it is compared with the present position, and the difference is judged as to whether it is within a specified range or not. If within the specified range, it indicates that the situation is normal (i.e. no bubble). If it is out of the specified range, it indicates that there is a bubble and an alarm is issued.

With the apparatus of the invention, if there is a bubble, the bubble is detected as a liquid surface, and hence the reagent cannot be sucked correctly. As shown in Fig. 4, if the bubble 42 is detected, suction makes the bubble 42 become a smaller bubble 46 as indicated by the broken line. If the suction amount is very slight, it is possible to suck by the action of the surface tension of the liquid, without having to lower the pipet. Since the bubble is smaller than the container 16, even a very slight suction of, for example, 10 µl will cause a detectable change in the height of the bubble. Alternatively, when the pipet descends next time, the bubble might have moved. Accordingly, if the liquid surface detecting position is too low as compared with the previous time (the number of pulses for driving the motor is too great), it is judged that there is a bubble.

To the contrary, the liquid surface may be correctly detected the first time, and the bubble may be detected the next time. Hence, if the liquid surface detecting position is too high as compared with the previous measurement (the number of pulses for driving the motor is too small), it may be also judged that there is a bubble.

Thus, the situation is judged to be normal if $P_1 < \Delta L < P_2$, and a bubble is assumed to be present if $\Delta L$ is out of this range. $\Delta L$ is the difference between the present number of driving pulses and the previous number of driving pulses. $P_1$ and $P_2$ are appropriate end range values.

The embodiment of the invention offers the following benefits.

(1) Since the liquid surface detecting means is not disposed by the side of the pipet, a thin reagent container may be used, and it is suitable for use with a small quantity system.

(2) The bubble can be detected securely.

Having described a preferred embodiment of the invention with reference to the accompanying drawings, it is to be understood that the invention is not limited to that precise embodiment, and that various changes and modifications may be effected thereto by one skilled in the art without departing from the invention.

## Claims

1. Apparatus for detecting bubbles in reagent pipetting apparatus, comprising:

   a pipet (10) for sucking and dispensing a reagent, the pipet (10) being movable up and down by driving means (34);

   a driving circuit (32) for driving and controlling the driving means (34);

   a liquid surface detecting circuit (19) for detecting the liquid surface of the reagent on the basis of an impedance change between the pipet (10) and the ground (14); and

   a control circuit (30) for comparing the height of the liquid surface before and after suction of reagent on the basis of liquid surface detection information (Vp) output by the liquid surface detecting circuit (19), determining that a bubble has been detected if the height difference is more than a specific value, and thereby controlling the driving circuit (32).

2. Apparatus according to claim 1, wherein the control circuit (30) is arranged to determine that a bubble has been detected if the height difference is outside a specific range of values.

3. Apparatus for detecting bubbles in reagent pipetting apparatus (10, 16, C), comprising:

   liquid surface detection means (19) for detecting the liquid surface of a reagent on the basis of an impedance change between a pipet (10) and the ground (14) that occurs when the pipet reaches the liquid surface; and

   means (30, 32) for determining whether the distance moved by the pipet (10) between successive suctions of the reagent into the pipet is consistent with the reagent being substantially free of bubbles.

FIG. 1  PRIOR ART

FIG.4

FIG. 2

FIG.3

## EP 0 526 210 A1

**European Patent Office**

# EUROPEAN SEARCH REPORT

Application Number

EP 92 30 6964

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | US-A-5 027 075 (HARDING)<br>* column 4, line 7 - column 5, line 50; figures * | 1 | G01N35/06<br>G01F23/26<br>B01L3/02 |
| A | WO-A-8 808 985 (BECKMAN)<br>* abstract *<br>* page 5, line 12 - line 27 *<br>* page 6, line 11 - line 23 *<br>* page 9, line 16 - line 34 * | 1-3 | |
| A | US-A-4 864 856 (ICHIKAWA ET AL.)<br>* column 5, line 28 - column 6, line 10 * | 1 | |
| A | EP-A-0 341 438 (ABBOTT)<br>* column 2, line 20 - line 30 *<br>* column 6, line 30 - column 7, line 6; figure 4B * | 1,3 | |
| A | US-A-4 893 515 (ICHIDA)<br>* column 3, line 50 - column 4, line 30 * | 2 | |
| A | EP-A-0 289 837 (BECTON DICKINSON COMPANY)<br>* abstract; figures * | 1 | TECHNICAL FIELDS SEARCHED (Int. Cl.5) |
| A | GB-A-2 198 535 (PARKE DAVIS AND CO LTD)<br>* abstract; figures * | 1 | G01N<br>G01F<br>B01L |

The present search report has been drawn up for all claims

| Place of search | Date of completion of the search | Examiner |
|---|---|---|
| THE HAGUE | 05 NOVEMBER 1992 | HOCQUET A.P. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

8